# EUROPÄISCHE PATENTANMELDUNG

(11) **EP 0 682 453 A2**
(43) Veröffentlichungstag der Anmeldung: **15.11.1995**
(21) Anmeldenummer: 95106460.9
(22) Anmeldetag: 28.04.1995
(51) Int. Cl.: H04N 7/18

(54) **Bildaufnahme- und Wiedergabesystem**

(30) Priorität: 11.05.1994 DE 4416589
(71) Anmelder: Carl Zeiss, D-89518 Heidenheim (Brenz) (DE); CARL-ZEISS-STIFTUNG, HANDELND ALS CARL ZEISS, D-89518 Heidenheim (Brenz) (DE); STN ATLAS Elektronik GmbH, D-28305 Bremen (DE)
(72) Erfinder: Beckstette, Klaus-Friedrich, Dr., D-73434 Aalen (DE); Nolting, Jürgen, Dr., D-73457 Essingen (DE); Stana, Hans, D-73447 Oberkochen (DE); Duveneck, Uwe, D-27755 Delmenhorst (DE); Lipinski, Ulrich, D-27777 Ganderkesee (DE)

(57) **Zusammenfassung**

Bildaufnahme- und Wiedergabesystem mit einem ersten Sehfeld (A), einer Kamera (1) mit einem zweiten Sehfeld (B), wobei das zweite Sehfeld (A) in einer Mehrzahl (n) im ersten Sehfeld (B) enthalten ist; mit einer Schwenkvorrichtung (2) für die Kamera (1) mit einer zur optischen Achse (11) der Kamera (1) gekippten Drehachse (21), mit einem Kompensationsspiegel (12), welcher um eine Achse (21) schwenkbar ist; mit einer Mehrzahl (n) von Monitoren (Dᵢ), die jeweils für die Wiedergabe eines Szenenteils (Cᵢ) mit dem zweiten Sehfeld (A) ausgebildet sind; mit einer Synchronisationseinrichtung (40) für die Schwenkvorrichtung (2) und für die Bewegung des Kompensationsspiegels (12), welche bewirkt, daß jeweils bei der Aufnahme eines Szenenteils (Cᵢ) mit dem zweiten Sehfeld (A) die Drehbewegung der Schwenkvorrichtung (2) durch den Kompensationsspiegel (12) ausgeglichen wird, wodurch ein Standbild ohne Bewegungsunschärfe (Sub-Pixel-Genauigkeit) durch die Drehbewegung der Kamera (1) auf der Schwenkvorrichtung (2) erzielt wird; mit einer Steuereinrichtung (41) für die Kamera (1), und die Schwenkvorrichtung (2), die die serielle Aufnahme einer Mehrzahl (n) nebeneinanderliegender Szenenteile (Cᵢ) mit dem jeweiligen zweiten Sehfeld (A) zur Erfassung eines Vollbildes mit dem ersten Sehfeld (B) bewirkt; mit einer Speicher- und Übertragungseinrichtung (42), welche die von der Kamera (1) erfaßten Bilder der Szenenteile (Cᵢ) speichert und den zugeordneten Monitoren (Dᵢ) zur Wiedergabe zuführt.

Bevorzugt wird, daß die Kamera (1) und die Monitore (Dᵢ) genormte Videobilder und Videosignale erfassen bzw. wiedergeben, z.B. als Manövrierhilfe für Wasserfahrzeuge.

## Beschreibung

Die Erfindung betrifft ein Bildaufnahme- und Wiedergabesystem mit einem ersten Sehfeld, einer Kamera mit einem zweiten Sehfeld, wobei das zweite Sehfeld in einer Mehrzahl im ersten Sehfeld enthalten ist, und mit einer Schwenkvorrichtung für die Kamera mit einer zur optischen Achse der Kamera gekippten Drehachse.

Derartiges ist als kostengünstiges Überwachungssystem mit einer VIS-, IR- oder Wärmebildkamera für große Sehfelder ohne verschlechterte geometrische Auflösung und damit reduzierte Reichweite bekannt. Die simultane Darstellung eines größeren Bildfeldes als dem zweiten Sehfeld der Kamera entspricht erfolgt dabei jedoch nicht.

Aufgabe der Erfindung ist es, ein gattungsgemäßes System für die simultane Bildwiedergabe des ganzen erfaßten ersten Sehfelds anzugeben, bei dem zugleich die Bewegungsunschärfe durch die Scanbewegung der Kamera unterdrückt ist. Gedacht ist z.B. an die Verwendung als Manövrierhilfe für Wasserfahrzeuge wie Fähren, wo keine schnellen Bewegungen, aber relativ große zu beobachtende Räume kennzeichnend sind.

Gelöst wird die Aufgabe dadurch, daß ein gattungsgemäßes Bildaufnahme- und Wiedergabesystem ausgestattet wird
- mit einem Kompensationsspiegel, welcher um eine Achse schwenkbar ist;
- mit einer Mehrzahl von Monitoren, die jeweils für die Wiedergabe eines Szenenteils mit dem zweiten Sehfeld ausgebildet sind;
- mit einer Synchronisationseinrichtung für die Schwenkvorrichtung und für die Bewegung des Kompensationsspiegels, welche bewirkt, daß jeweils bei der Aufnahme eines Szenenteils mit dem zweiten Sehfeld die Drehbewegung der Schwenkvorrichtung durch den Kompensationsspiegel ausgeglichen wird, wodurch ein Standbild ohne Bewegungsunschärfe durch die Drehbewegung der Kamera auf der Schwenkvorrichtung erzielt wird;
- mit einer Steuereinrichtung für die Kamera und die Schwenkvorrichtung, welche die serielle Aufnahme einer Mehrzahl nebeneinanderliegender Szenenteile mit dem jeweiligen zweiten Sehfeld zur Erfassung eines Vollbildes mit dem ersten Sehfeld bewirkt;
- mit einer Speicher- und Übertragungseinrichtung, welche die von der Kamera erfaßten Bilder der Szenenteile speichert und den zugeordneten Monitoren zur Wiedergabe zuführt.

Vorteilhaft und besonders wirtschaftlich ist es, wenn die Kamera und die Monitore genormte Videobilder und Videosignale erfassen bzw. wiedergeben. Dann können hierfür normale Seriengeräte eingesetzt werden, und auch die Speicher- und Übertragungseinrichtung kann weitgehend auf bewährte Serientechnik zurückgreifen. Durch geeignete Auslegung der Steuereinrichtung ist es möglich, ein lückenloses Bild mit unmittelbar aneinander anschließenden Szenenteilen aufzunehmen, wobei die Anreihung der Szenenteile und der Monitore eindimensional, insbesondere linear bzw. rundum in horizontaler oder vertikaler Richtung, oder auch zweidimensional, z.B. mäanderförmig, erfolgen kann. Prädestiniert ist das erfindungsgemäße System zur Aufnahme eines 360°-Rundumsicht-Panoramas. Hier kann dann die Schwenkvorrichtung mit der Kamera mit fester Winkelgeschwindigkeit umlaufen.

Die Drehachse der Schwenkvorrichtung und die Achse des Kompensationsspiegels sollten möglichst zusammenfallen, um ein verzerrungsfreies Bild zu erhalten. Zur synchronen Kopplung der Kamera- und Spiegelbewegung ist eine getriebliche Lösung für die geforderten Präzision der Synchronisation wegen Verschleiß nicht gut geeignet. Eine Synchronisation durch Erfassung der Winkellage der Schwenkvorrichtung mit einem Winkelsensor, z.B. einem optischen Winkelschrittgeber, und entsprechende Regelung des Antriebs für den Kompensationsspiegel, der z.B. aus einem Torque-Motor ohne nachgeschaltetem Getriebe besteht, ist vorteilhafter, da langzeitstabil. Es ist gerade damit möglich, die Synchronisation so gut zu gestalten, daß Sub-Pixel-Genauigkeit erreicht wird und somit die Schärfe des von der Kamera erfaßten Bildes gegenüber normalem stationären Betrieb nicht leidet. Für eine verzerrungsfreie Aufnahme und Wiedergabe ist es auch sinnvoll, daß die Drehachse des Kompensationsspiegels senkrecht auf der optischen Achse der Kamera steht.

Eine bevorzugte Verwendung findet das erfindungsgemäße System als Manövrierhilfe für Wasserfahrzeuge.

Näher erläutert wird die Erfindung anhand des Beispiels gemäß der Zeichnung.
- Fig. 1: zeigt einen schematischen Systemüberblick;
- Fig. 2: zeigt eine schematische Darstellung der optischen, mechanischen und elektronischen Komponenten.

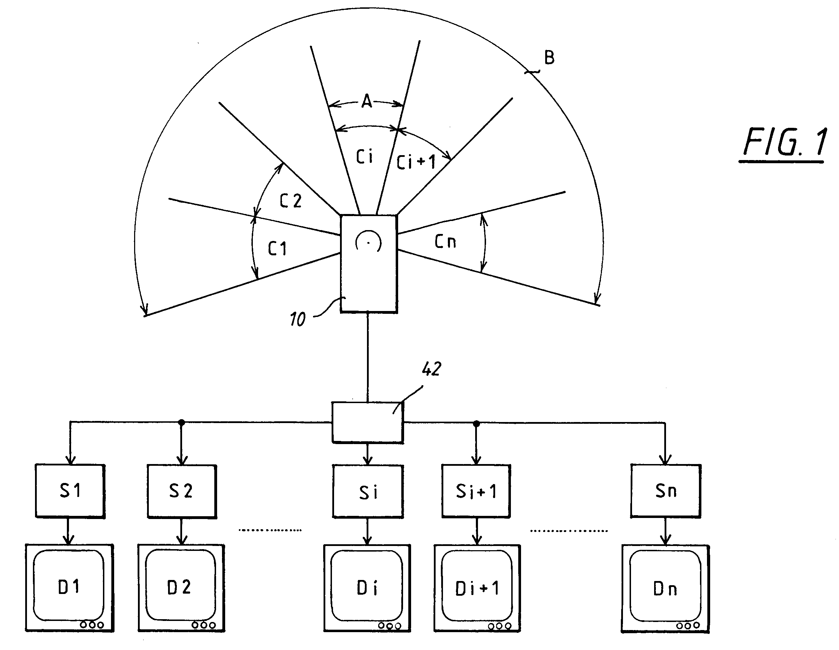

Figur 1 zeigt eine Kameraeinheit (10) mit dem insgesamt zu erfassenden und darzustellenden ersten Sehfeld B - einem bestimmten Raumwinkel. Die Kameraeinheit (10) erfaßt jeweils nur das kleinere zweite Sehfeld A und nimmt so seriell die Szenenteile Cᵢ, i = 1 bis n mit jeweils dem zweiten Sehfeld A auf, wodurch das ganze erste Sehfeld B erfaßt wird. Die Speicher- und Übertragungseinrichtung (42) speichert die zu den Szenenteilen Cᵢ gehörenden Videosignale Sᵢ und führt sie simultan den Monitoren Dᵢ zur Wiedergabe zu. Die Monitore Dᵢ sind vorzugsweise normgerechte handelsübliche Videobildschirme. Auf einem Schiff kann die Kameraeinheit z.B. auf einem Mast, am Bug oder am Heck angeordnet sein und die Monitore Dᵢ sind auf der Kommandobrücke in einem Panorama rundum entsprechend der Sehrichtung der einzelnen Szenenteile Cᵢ angeordnet.

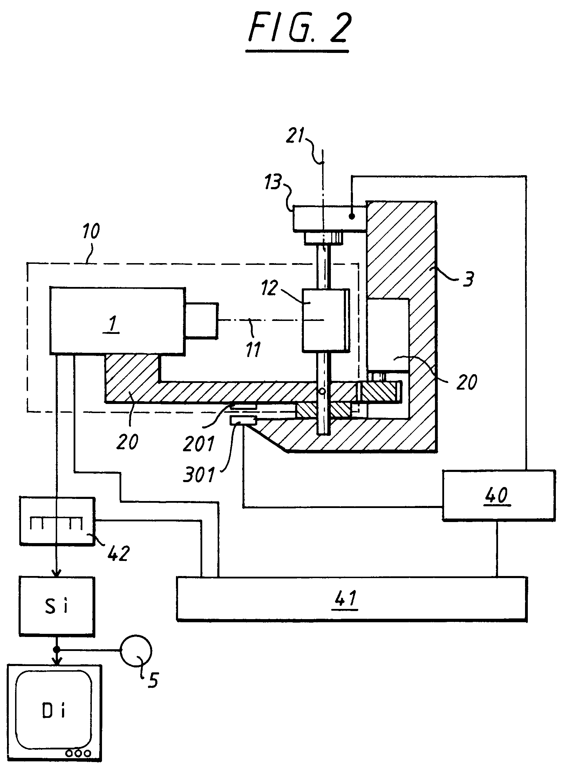

Figur 2 zeigt die Kameraeinheit (10) bestehend aus Kamera (1), Kompensationsspiegel (12) und Schwenkvorrichtung (2). Die Kamera (1) ist vorzugsweise eine serienmäßige Videokamera, aber auch eine IR-Kamera oder ein Wärmebildgerät, welche zu jedem Szenenteil Cᵢ Videosignale Sᵢ der gleichen Norm erzeugt, wie sie auch von den Monitoren Dᵢ zur Wiedergabe verwendet werden. Die Schwenkeinrichtung (2) ist mit einem Motor (20), der Kompensationsspiegel (12) mit einem Torque-Motor (13) (Motor mit hohem Drehmoment bei kleiner Nenndrehzahl, als Direktantrieb ohne Untersetzungsgetriebe geeignet) gegenüber dem Gestell (3) in Drehbewegung versetzt. Die Schwenkeinrichtung (2) und der Kompensationsspiegel (12) haben eine gemeinsame Drehachse (21) - um die beide unabhängig voneinander drehbar sind - , welche senkrecht zur optischen Achse (11) der Kamera (1) orientiert ist. Mit dieser Geometrie wird die serielle Aufnahme der Szenenteile Cᵢ am einfachsten.

Mit einem Winkelsensor, bestehend z.B. aus einer Winkelteilung (201) am Arm der Schwenkeinrichtung (2) und einer gegenüberliegenden Ableseeinrichtung (301) am Gestell (3), beide kommerziell und serienmäßig erhältlich, erfaßt eine Synchronisationseinrichtung (40) die momentane Lage der Schwenkeinrichtung (2) und steuert damit den Torque-Motor (3) für den Kompensationsspiegel (12) und auch den Motor (20) für die Schwenkeinrichtung (2) so, daß für die Aufnahme jedes Szenenteils Cᵢ die Schwenkbewegung der Kamera (1) durch den Kompensationsspiegel (12) jeweils mit einer Genauigkeit unterhalb der Pixelgröße der Kamera (1) kompensiert wird.

Eine Steuereinrichtung (41) synchronisiert die Bildaufnahme der Kamera (1) mit dem Bewegungsablauf der Schwenkeinrichtung (2) über die Synchronisationseinrichtung (40) und steuert die Speicher- und Übertragungseinrichtung (42) derart, daß die jeweils von der Kamera (1) erzeugten Videosignale Sᵢ den richtigen Szenenteil Cᵢ und dem richtigen Monitor Dᵢ zugeordnet werden.

Synchronisationseinrichtung (40), Steuereinrichtung (41) und Speicher- und Übertragungseinrichtung (42) sind dabei funktionell definiert und können baulich frei von Grenzen realisiert werden, z.B. in einer einzigen Schaltungseinheit. Dabei kann ein programmgesteuerter Mikroprozessor integriert sein oder auch extern als Steuerrechner fungieren. Serienmäßige Bausteine der Videotechnik können insbesondere für die Speicher- und Übertragungseinrichtung (42) verwendet werden, wobei Teile davon auch in der Kamera (1) oder den Monitoren Dᵢ enthalten sein können.

Außer den Videomonitoren Dᵢ können auch andere Ausgänge (5) die Videosignale Sᵢ erhalten, mit denen z.B. eine automatische Bildanalyse, Warnfunktion und anderes realisiert werden können.

Der Bewegungsablauf der Schwenkeinrichtung (2) kann insbesondere in drei bevorzugten (die Reihenfolge stellt keine Gewichtung dar) Varianten ausgeführt werden:
1. Für 360°-Panorama-Aufnahmen dauernde Drehbewegung mit konstanter Winkelgeschwindigkeit;
2. Sägezahnartige Drehgeschwindigkeit mit Aufnahme der Szenenteile C₁ bis Cₙ, Umkehrphase, schneller Rücklauf, Umkehrphase, nächste Aufnahme der C₁ bis Cₙ;
3. Rechtsdrehung zur Aufnahme von C₁ bis Cₙ, Umkehrphase, Linksdrehung zur Aufnahme von Cₙ bis C₁, Umkehrphase.

Für 1. müßte das Gestell (3) gegenüber Fig. 2 geändert werden. Bei 2. und 3. ist der Motor (20) für hinreichend kurze Umkehrphasen entsprechend drehmomentstark auszuführen. Die Speicher- und Übertragungseinrichtung (42) muß die Umkehrphasen als Totzeiten berücksichtigen. Bei 3. ist es erforderlich, die sägezahnartige Drehbewegung des Kompensationsspiegels (12) für den Linkslauf ebenfalls mit umgekehrtem Drehsinn ablaufen zu lassen. Die Umkehrphasen können beliebig kurz werden, wenn mit dem Kompensationsspiegel (12) durch geeignete Steuerung auch beschleunigte Kamerabewegungen kompensiert werden.

Die Gesamtfunktion wäre im Prinzip auch ohne den Kompensationsspiegel (12) und die dafür erforderlichen Einrichtungen realisierbar. Dann müßte jedoch die Kamera (1) schrittweise gedreht werden. Um akzeptabel kurze Zeiten für den Übergang von einem Szenenteil Cᵢ zum nächsten Cᵢ₊₁ zu erreichen, wären aber hohe Drehbeschleunigungen erforderlich. Das dafür erforderliche Drehmoment ist für einen Antriebsmotor (evtl. incl. Getriebe) (20) bei der gleichzeitig geforderten hohen Positioniergenauigkeit und Reproduzierbarkeit schwierig und aufwendig. Zudem würde die - empfindliche optoelektronische Elemente enthaltende - Kamera (1) mit hoher Frequenz einer Stoßbeanspruchung ausgesetzt, was auch bei dieser besondere Maßnahmen erforderte und die Lebensdauer reduzieren würde. Mit der erfindungsgemäßen Lösung sind derartig schnell beschleunigte Bewegungen nur noch von dem kleinen, leichten und stabilen Kompensationsspiegel (12) auszuführen.

## Patentansprüche

1. Bildaufnahme- und Wiedergabesystem
- mit einem ersten Sehfeld (B),
- einer Kamera (1) mit einem zweiten Sehfeld (A), wobei das zweite Sehfeld (A) in einer Mehrzahl (n) im ersten Sehfeld (B) enthalten ist;
- mit einer Schwenkvorrichtung (2) für die Kamera (1) mit einer zur optischen Achse (11) der Kamera (1) gekippten Drehachse (21),
gekennzeichnet durch die Ausstattung
- mit einem Kompensationsspiegel (12), welcher um eine Achse (21) schwenkbar ist;
- mit einer Mehrzahl (n) von Monitoren (Dᵢ), die jeweils für die Wiedergabe eines Szenenteils (Cᵢ) mit dem zweiten Sehfeld (A) ausgebildet sind;
- mit einer Synchronisationseinrichtung (40) für die Schwenkvorrichtung (2) und für die Bewegung des Kompensationsspiegels (12), welche bewirkt, daß jeweils bei der Aufnahme eines Szenenteils (Cᵢ) mit dem zweiten Sehfeld (A) die Drehbewegung der Schwenkvorrichtung (2) durch den Kompensationsspiegel (12) ausgeglichen wird, wodurch ein Standbild ohne Bewegungsunschärfe durch die Drehbewegung der Kamera (1) auf der Schwenkvorrichtung (2) erzielt wird;
- mit einer Steuereinrichtung (41) für die Kamera (1), und die Schwenkvorrichtung (2), die die serielle Aufnahme einer Mehrzahl (n) nebeneinanderliegender Szenenteile (Cᵢ) mit dem jeweiligen zweiten Sehfeld (A) zur Erfassung eines Vollbildes mit dem ersten Sehfeld (B) bewirkt;
- mit einer Speicher- und Übertragungseinrichtung (42), welche die von der Kamera (1) erfaßten Bilder der Szenenteile (Cᵢ) speichert und den zugeordneten Monitoren (Dᵢ) zur Wiedergabe zuführt.

2. Bildaufnahme- und Wiedergabesystem nach Anspruch 1, dadurch gekennzeichnet, daß die Kamera (1) und die Monitore (Dᵢ) genormte Videobilder und Videosignale erfassen bzw. wiedergeben.

3. Bildaufnahme- und Wiedergabesystem nach Anspruch 1 oder 2, dadurch gekennzeichnet, daß die Szenenteile (Cᵢ) unmittelbar aneinander anschließen.

4. Bildaufnahme- und Wiedergabesystem nach Anspruch 1, 2 oder 3, dadurch gekennzeichnet, daß die Szenenteile (Cᵢ) und die Monitore (Dᵢ) eindimensional aneinandergereiht sind.

5. Bildaufnahme- und Wiedergabesystem nach Anspruch 1, 2 oder 3, dadurch gekennzeichnet, daß die Szenenteile (Cᵢ) und die Monitore (Dᵢ) zweidimensional aneinandergereiht sind.

6. Bildaufnahme- und Wiedergabesystem nach mindestens einem der Ansprüche 1 - 5, dadurch gekennzeichnet, daß das erste Sehfeld (B) eine Rundumsicht (360°) bietet.

7. Bildaufnahme- und Wiedergabesystem nach mindestens einem der Ansprüche 1 - 6, dadurch gekennzeichnet, daß die Drehachse (21) der Schwenkvorrichtung (2) und die Achse (21) des Kompensationsspiegels (12) zusammenfallen.

8. Bildaufnahme- und Wiedergabesystem nach mindestens einem der Ansprüche 1 - 7, dadurch gekennzeichnet, daß die Synchronisationseinrichtung (40) einen Winkelsensor (201, 301) an der Schwenkvorrichtung (2) und einen geregelten Antrieb (13), insbesondere einen Torque-Motor, für den Kompensationsspiegel (12) enthält.

9. Bildaufnahme- und Wiedergabesystem nach mindestens einem der Ansprüche 1 - 8, dadurch gekennzeichnet, daß die Synchronisationseinrichtung (40) mit Sub-Pixel-Genauigkeit die Bewegungsunschärfe aufgrund der Drehbewegung der Kamera (1) kompensiert.

10. Bildaufnahme- und Wiedergabesystem nach mindestens einem der Ansprüche 1 - 9, dadurch gekennzeichnet, daß die Drehachse (21) senkrecht auf der optischen Achse (11) der Kamera (1) steht.

11. Verwendung eines Bildaufnahme- und Wiedergabesystems nach mindestens einem der Ansprüche 1 - 10 als Manövrierhilfe für Wasserfahrzeuge.
